**Europäisches Patentamt**

**European Patent Office**

**Office européen des brevets**

(11) Veröffentlichungsnummer: **0 242 413 B1**

## EUROPÄISCHE PATENTSCHRIFT

(45) Veröffentlichungstag der Patentschrift: **29.05.91**

(51) Int. Cl.⁵: **H04N 7/137**

(21) Anmeldenummer: **86105444.3**

(22) Anmeldetag: **19.04.86**

(54) **Datenreduzierschaltung mit einem Differenz-Pulscodemodulator für Videosignale.**

(43) Veröffentlichungstag der Anmeldung:
**28.10.87 Patentblatt 87/44**

(45) Bekanntmachung des Hinweises auf die
Patenterteilung:
**29.05.91 Patentblatt 91/22**

(84) Benannte Vertragsstaaten:
**DE FR GB**

(56) Entgegenhaltungen:
**EP-A- 0 104 470**
**WO-A-80/00207**
**US-A- 4 075 655**

**PROCEEDINGS OF THE IEEE, Band 73, Nr. 4,
April 1985, Seiten 592-598, IEEE, New York,
US; P. PIRSCH: "Design of a DPCM codec for
VLSI realization in CMOS technology"**

(73) Patentinhaber: **Deutsche ITT Industries GmbH
Hans-Bunte-Strasse 19 Postfach 840
W-7800 Freiburg i.Br.(DE)**

(72) Erfinder: **Pirsch, Peter, Dr.
Schäferstrasse 56
W-7140 Ludwigsburg(DE)**

## Beschreibung

Die Erfindung betrifft eine Datenreduzierschaltung für die Stellenzahl von digitalen Videosignalen mit einem Differenz-Pulscodemodulator entsprechend dem Oberbegriff des Anspruchs 1. Eine derartige Datenreduzierschaltung ist vom Erfinder in einem Aufsatz der Zeitschrift "Proc. IEEE", April 1985, Seiten 592 bis 598 beschrieben worden. Danach erlaubt die vorbeschriebene Anordnung eine Taktfrequenz von etwa 10 MHz und die Realisierung mittels einer einzigen integrierten Schaltung, wenn dafür eine 2-$\mu$m-CMOS-Technik verwendet wird. Bei der vorbeschriebenen Anordnung ist die maximal mögliche Taktfrequenz von etwa 10 MHz dann zu niedrig, wenn derartige Datenreduzierschaltungen in Schaltungen eingesetzt werden sollen, mit denen ein flimmerfreies Fernsehbild ermöglicht werden soll. In diesem Fall sind nämlich höhere Taktfrequenzen, die etwa 17 bis 20 MHz betragen, erforderlich.

Bei der vorbeschriebenen Anordnung sind in der die maximale Taktfrequenz begrenzenden zeitkritischen Schleife ein Subtrahierer, ein Addierer, ein Begrenzer und ein Quantisierer enthalten. Diese Schleife muß innerhalb einer Periode des Taktsignals die erforderlichen Berechnungen vornehmen, was bei entsprechend schnellen Addier/Subtrahierstufen mittels der vorbeschriebenen Anordnung nur innerhalb etwa 100 ns erfolgen kann.

Die Aufgabe der in den Ansprüchen gekennzeichneten Erfindung besteht daher darin, die Datenreduzierschaltung so auszugestalten, daß eine der beabsichtigten Arbeitsfrequenz von etwa 17 bis 20 MHz entsprechende kürzere Rechenzeit erreichbar ist. Dabei soll bewußt in Kauf genommen werden, daß sich die Gesamtschaltung gegenüber der vorbeschriebenen Anordnung komplizierter gestaltet und daß sie insgesamt betrachtet mehr Teilschaltungen enthält als die vorbeschriebene Schaltung. Der in der Aufgabenlösung liegende Vorteil einer im Vergleich zur vorbeschriebenen Anordnung etwa doppelt so schnellen Verarbeitungsgeschwindigkeit wird u.a. dadurch erreicht, daß die zeitkritische Schleife nur noch aus dem Quantisierer und einem Subtrahierer besteht, der Addierer und der Begrenzer darin also entfallen sind; der Begrenzer kann vor dem Eingang der Datenreduzierschaltung angeordnet werden.

Der Begrenzer am Eingang hat die Aufgabe, in Abhängigkeit von der Quantisierercharakteristik die Stellenzahl der Eingangsdaten so zu reduzieren, daß bei der Rekonstruktion der Abtastwerte innerhalb der DPCM-Schleife eine Stellenzahl von z.B. 8 bit nicht überschritten wird.

Der erwähnte Aufbau der zeitkritischen Schleife ist bereits auch beim Gegenstand des älteren europäischen Patents EP-A-0 197 165 (veröffentlicht 15/10/86) (DITTI-case S. Mehrgardt 9) vorhanden. Bei Untersuchungen dieser Anordnung, die dem Erfinder konzernintern zur Kenntnis gelangt ist, stellte er fest, daß die in den beiden rekursiven Schleifen dieser Anordnung mit den Konstanten-Multiplizierern für $2^{-1}$ auftretenden Rundungseffekte, die durch die Beschränkung der Stellenzahl der Signale bedingt ist, sich nachteilig auf das Verhalten der Datenreduzierschaltung bei Eingangssignalen mit geringer zeitlicher Änderung auswirken, so daß ein verstärkter sogenannter Granular-Noise-Effekt auftritt. Zusätzlich wird dadurch auch der Übertragungsfehlerabbau im Empfänger verschlechtert. Die Erfindung gibt nun eine Anordnung an, bei der unter Beibehaltung des Aufbaus der zeitkritischen Schleife, wie er in der älteren europäischen Anmeldung gezeigt ist, diese Rundungseffekte auf ein erträgliches Maß reduziert sind. Neben der zeitkritischen Schleife gibt es nur noch Signalwege, bei denen zwischen zwei aufeinanderfolgenden Verzögerern zwei Addierer bzw. ein Addierer und ein Subtrahierer erforderlich sind, was für die ältere Anordnung gerade nicht zutrifft.

Weitere Vorteile ergeben sich aus der weiteren Erläuterung der Erfindung anhand der Figuren der Zeichnung.

Fig. 1 zeigt in Form eines Blockschaltbilds ein Ausführungsbeispiel der Erfindung,

Fig. 2 zeigt in Form eines Blockschaltbilds eine Ausgestaltung für eine Teilschaltung nach Fig. 1, und

Fig. 3 zeigt in Form eines Blockschaltbilds eine Ausgestaltung der Teilschaltung nach Fig. 2.

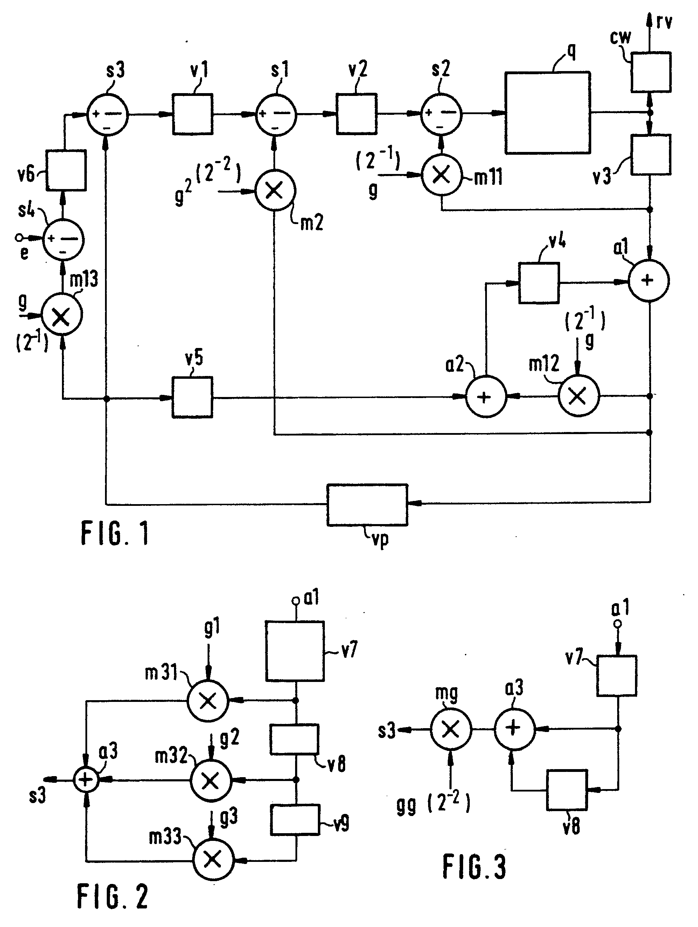

Das in Fig. 1 gezeigte Blockschaltbild eines Ausführungsbeispiels der Erfindung enthält den Eingang e für die Eingangsdaten, also die digitalen Videosignale, deren Stellenzahl z.B. von 8 auf 4 zu reduzieren ist und die hier bereits begrenzt vorliegen. Die Eingangsdaten sind bei der vorbeschriebenen Anordnung dem ersten Verzögerer v1 zugeführt, dessen Ausgang am Minuend-Eingang des ersten Subtrahierers s1 liegt, von dessen Ausgang sie über den zweiten Verzögerer v2 an den Minuend-Eingang des zweiten Subtrahierers s2 gelangen.

Dessen Ausgang liegt am Eingang des Quantisierers q, dessen Aufbau von vorbeschriebener Art sein kann, der also insbesondere ein Festwertspeicher mit Quantisiertabelle für z.B. 16 Werte sein kann. Sein Ausgang liegt einerseits über den Codewandler cw am Ausgang für das datenreduzierte Ausgangssignal rv und andererseits direkt am Eingang des dritten Verzögerers v3. Dessen Ausgang ist ferner über den ersten Konstanten-Multiplizierer m11 für den ersten Gewichtsfaktor g mit dem Subtrahend-Eingang des zweiten Subtrahierers s2 verbunden.

Der Ausgang des ersten Addierers a1 ist über den Konstanten-Multiplizierer m2 für den zweiten Gewichtsfaktor g², der gleich dem Quadrat des ersten Gewichtsfaktor g ist, mit dem Subtrahend-Eingang des ersten Subtrahierers s1 verbunden; ferner liegt er in dieser Reihenfolge über den zweiten Konstanten-Multiplizierer m12 für den Gewichtsfaktor g , über die eine Eingangs-Ausgangs-Strecke des zweiten Addierers a2 und über den vierten Verzögerer v4 am zweiten Eingang des ersten Addierers a1 und schließlich am Eingang des Vertikalprädiktors vp.

Dessen Ausgang ist mit dem Subtrahend-Eingang des dem ersten Verzögerer v1 vorgeschalteten dritten Subtrahierers s3, ferner über den fünften Verzögerer v5 mit dem anderen Eingang des zweiten Addierers a2 und über den dritten Konstanten-Multiplizierer m13 des ersten Gewichtsfaktors g mit dem Subtrahend-Eingang des über den sechsten Verzögerer v6 am Minuend-Eingang des dritten Subtrahierers s3 liegenden vierten Subtrahierers s4 verbunden, dessen Minuend-Eingang der Eingang e für die Eingangssignale ist.

Die jeweilige Verzögerungszeit des ersten bis vierten und des sechsten Verzögerers v1...v4, v6 ist gleich der Periodendauer des Taktsignals, die des fünften Verzögerers v5 jedoch ist doppelt so groß.

Nach dem in Fig. 2 gezeigten Ausführungsbeispiel für den Vertikalprädiktor vp nach Fig. 1 enthält dieser eingangsseitig den siebten Verzögerer v7, dessen Verzögerungszeit um 2 Periodendauern des Taktsignals kürzer ist als das der Anzahl der Bildpunkte pro Videozeile entsprechende Vielfache dieser Periodendauer. Dem Ausgang des siebten Verzögerers v7 ist die Serienschaltung des achten und des neunten Verzögerers v8, v9 nachgeschaltet, deren Verzögerungszeit jeweils gleich der Periodendauer des Taktsignals ist. Eingang, Mittelabgriff und Ausgang dieser Serienschaltung liegen über den jeweils weiteren Konstanten-Multiplizierer m31, m32, m33 für weitere Gewichtsfaktoren g1, g2, g3 an jeweils einem der drei Eingänge des dritten Addierers a3, dessen Ausgang der des Vertikalprädiktors vp ist.

Fig. 3 zeigt eine vereinfachte Ausgestaltung der Anordnung nach Fig.2. Der neunte Verzögerer v9 und der diesem nachgeschaltete weitere Konstanten-Multiplizierer m33 sind entfallen. Die beiden anderen weiteren Konstanten-Multiplizierer m31, m32 sind zu einem Konstanten-Multiplizierer mg für den gemeinsamen Gewichtsfaktor gg zusammengefaßt, der dem Ausgang des dritten Addierers a3 nachgeschaltet ist. Die Verzögerungszeit des siebten Verzögerers v7 ist um vier Periodendauern des Taktsignals kürzer als das der Anzahl der Bildpunkte pro Videozeile entsprechende Vielfache dieser Periodendauer.

Es ist auch möglich, den siebten Verzögerer v7 als Bildspeicher auszubilden.

Die Gewichtsfaktoren g bzw. g², gg haben in den Ausführungbeispielen nach den Fig. 1 und 3 bevorzugt die Werte 1/2 bzw. 1/4, wie dies in diesen Figuren durch die in Klammern angegebenen Zweierpotenzen gezeigt ist.

Obwohl in den Figuren der Zeichnung die signalführenden Leitungen zwischen den einzelnen Teilschaltungen lediglich als einfache Verbindungsleitungen gezeigt sind, symbolisieren diese jedoch Busse, da die einzelnen Teilschaltungen solche zur parallelen Verarbeitung von Datenwörtern sind, was sich aus der eingangs erwähnten Arbeitsgeschwindigkeit der Datenreduzierschaltung nach der Erfindung ergibt. Unter paralleler Signalverarbeitung soll dabei auch eine solche nach dem sogenannten Pipeline-Verfahren verstanden werden, bei dem die einzelnen Stellen eines Digitalworts innerhalb des vom Taktsignal gebildeten Taktsystems um mindestens eine Taktperiode verzögert gegenüber den anderen Stellen verarbeitet werden.

Die Schaltungsanordnung nach der Erfindung eignet sich nicht nur zur Realisierung in der eingangs erwähnten CMOS-Technik, sondern kann auch in jeder Halbleitertechnologie, wie z.B. N-Kanal-MOS- Technik, realisiert werden, um so erhöhte Taktraten für Differenz-Pulscodemodulatoren zu ermöglichen.

## Ansprüche

1. Datenreduzierschaltung für die Stellenzahl von digitalen Videosignalen mit einem Differenz-Pulscodemodulator, der als Teilschaltungen Verzögerer (v...), Addierer (a...), Subtrahierer (s...), Multiplizierer (m...), einen Horizontal- und einen Vertikalprädiktor (vp), die der Prädiktion unter Verwendung von Gewichtsfaktoren, die kleiner als eins sind, das einem betrachteten Datenwort einer Zeile des Fernsehbildes vorausgehende Datenwort, das diesem entsprechende Datenwort der vorausgehenden Zeile sowie das dem betrachteten Datenwort entsprechende der vorausgehenden Zeile zugrundelegen, sowie einen Quantisierer (q) enthält, dessen Ausgangsdaten von einem Codewandler (cw) in ein Ausgangssignal (rv) mit der reduzierten Stellenzahl umgesetzt sind, wobei

   - die Teilschaltungen zur parallelen Datenverarbeitung ausgebildet sind,
   - die Eingangsdaten einem ersten Verzögerer (v1), dessen Ausgang am Minuend-Eingang eines ersten Subtrahierers (s1) liegt, zugeführt sind, und sich im Takt eines Taktsignals ändern,

- der Ausgang des ersten Subtrahierers (s1) über einen zweiten Verzögerer (v2) am Minuend-Eingang eines zweiten Subtrahierers (s2) liegt, dessen Ausgang mit dem Eingang des Quantisierers (q) verbunden ist,
- der Ausgang des letzteren über einen dritten Verzögerer (v3) mit dem ersten Eingang eines ersten Addierers (a1) gekoppelt ist und über einen ersten Konstanten-Multiplizierer (m11) eines ersten Gewichtsfaktors (g) am Subtrahend-Eingang des zweiten Subtrahierers (s2) liegt und
- die jeweilige Verzögerungszeit der drei Verzögerer (v1, v2, v3) gleich der Periodendauer des Taktsignals ist, gekennzeichnet durch folgende Merkmale:
- der Ausgang des Quantisierers (q) liegt direkt am Eingang des dritten Verzögerers (v3),
- dem ersten Verzögerer (v1) ist die Minuend-Eingang-Ausgangs-Strecke eines dritten Subtrahierers (s3) vorgeschaltet,
- der Ausgang des ersten Addierers (a1) ist über einen Konstanten-Multiplizierer (m2) eines zweiten Gewichtsfaktors ($g^2$), der gleich dem Quadrat des ersten (g) ist, mit dem Subtrahend-Eingang des ersten Subtrahierers (s1), ferner in dieser Reihenfolge über einen zweiten Konstanten-Multiplizierer (m12) des ersten Gewichtsfaktors (g), über die eine Eingangs-Ausgangs-Strecke eines zweiten Addierers (a2) und über einen vierten Verzögerer (v4) mit dem zweiten Eingang des ersten Addierers (a1) sowie mit dem Eingang des Vertikalprädiktors (vp) verbunden,
- dessen Ausgang ist
  - mit dem Subtrahend-Eingang des dritten Subtrahierers (s3),
  - über einen dritten Konstanten-Multiplizierer (m13) des ersten Gewichtsfaktors (g) mit dem Subtrahend-Eingang eines vierten Subtrahierers (s4) und
  - über einen fünften Verzögerer (v5) mit dem anderen Eingang des zweiten Addierers (a2) verbunden,
- das Ausgangssignal des vierten Subtrahierers (s4) ist über einen sechsten Verzögerer (v6) dem Minuend-Eingang des dritten Subtrahierers (s3) anstatt der Eingangssignale, die am Minuend-Eingang des vierten Subtrahierers (s4) liegen, zugeführt, und
- die Verzögerungszeit des fünften Verzögerers (v5) ist gleich der doppelten und die des sechsten Verzögerers (v6) gleich der einfachen Periodendauer des Taktsignals.

2. Datenreduzierschaltung nach Anspruch 1, dadurch gekennzeichnet, daß die Gewichtsfaktoren Zweierpotenzen mit negativen Exponenten sind.

3. Datenreduzierschaltung nach Anspruch 2, dadurch gekennzeichnet, daß der erste Gewichtsfaktor (g) gleich $2^{-1}$ ist.

4. Datenreduzierschaltung nach einem der Ansprüche 1 bis 3, gekennzeichnet durch folgenden Vertikalprädiktor (vp):
   - er enthält eingangsseitig einen siebten Verzögerer (v7), dessen Verzögerungszeit um zwei Periodendauern des Taktsignals kürzer ist als das der Anzahl der Bildpunkte pro Videozeile entsprechende Vielfache dieser Periodendauer,
   - dem Ausgang des siebten Verzögerers (v7) ist die Serienschaltung eines achten und eines neunten Verzögerers (v8, v9) nachgeschaltet, deren Verzögerungszeit jeweils gleich der Periodendauer des Taktsignal ist, und
   - Eingang, Mittelabgriff und Ausgang dieser Serienschaltung liegen über jeweils einen weiteren Konstanten-Multiplizierer (m31, m32, m33) für weitere Gewichtsfaktoren (g1, g2, g3) an jeweils einem der drei Eingänge eines dritten Addierers (a3), dessen Ausgang der des Vertikalprädiktors (vp) ist.

5. Datenreduzierschaltung nach Anspruch 4, gekennzeichnet durch folgende Merkmale:
   - die Verzögerungszeit des siebten Verzögerers (v7) ist um vier Periodendauern des Taktsignals kürzer als das der Anzahl der Bildpunkte pro Videozeile entsprechende Vielfache dieser Periodenauer,
   - der neunte Verzögerer (v9) und der diesem nachgeschaltete weitere Konstanten-Multiplizierer (m33) entfallen, und
   - die beiden anderen weiteren Konstanten-Multiplizierer (m31, m32) sind zu einem Konstanten-Multiplizierer (mg) für den gemeinsamen Gewichtsfaktor (gg) zusammengefaßt, der dem Ausgang des dritten Addierers (a3) nachgeschaltet ist.

## Claims

1. Data reduction circuit for reducing the number of bits of digital video signals with a differential pulse code modulator containing as subcircuits delay elements (v...), adders (a...), subtracters (s...), multipliers (m...), a horizontal predictor and a vertical predictor (vp) which, using weighting factors smaller than one, base the prediction on the data word preceding a considered data word of a line of the television picture, on the corresponding data word of the preceding line, and on that data word of the preceding line corresponding to the considered data word, and a quantizer (q) whose output data is converted by a code converter (cw) into an output signal (rv) with the reduced number of bits, with

   - the subcircuits designed as parallel-data-processing subcircuits,
   - the input data being fed to a first delay element (v1) and changing at the rate of a clock signal, with the output of the first delay element (v1) connected to the minuend input of a first subtracter (s1),
   - the output of the first subtracter (s1) connected via a second delay element (v2) to the minuend input of a second subtracter (s2) having its output coupled to the input of the quantizer (q),
   - the output of the latter coupled through a third delay element (v3) to the first input input of a first adder (a1) and through a first constant multiplier (m11) for a first weighting factor (g) to the subtrahend input of the second subtracter (s2), and
   - the delay of each of the three delay elements (v1, v2, v3) being equal to the period of the clock signal, characterized by the following features:
   - The output of the quantizer (q) is connected directly to the input of the third delay element (v3);
   - the first delay element (v1) is preceded by the minuend-input-output path of a third subtracter (s3);
   - the output of the first adder (a1) is coupled to the subtrahend input of the first subtracter (s1) through a constant multiplier (m2) for a second weighting factor (g²), which is equal to the square of the first weighting factor (g), to the second input of the first adder (a1) through a second constant multiplier (m12) for the first weighting factor (g), one of the input-output paths of a second adder (a2), and a fourth delay element (v4), and to the input of the vertical predictor (vp);

   - the output of the vertical predictor (vp) is connected
     - to the subtrahend input of the third subtracter (s3),
     - through a third constant multiplier (m13) for the first weighting factor (g) to the subtrahend input of a fourth subtracter (s4), and
     - through a fifth delay element (v5) to the other input of the second adder (a2);
   - the output signal of the fourth subtracter (s4) is applied through a sixth delay element (v6) to the minuend input of the third subtracter instead of the input signals, which are applied to the minuend input of the fourth subtracter (s4), and
   - the delay of the fifth delay element (v5) is equal to twice the clock period, and that of the sixth delay element (v6) to one clock period.

2. A data reduction circuit as claimed in claim 1, characterized in that the weighting factors are powers of two with negative exponents.

3. A data reduction circuit as claimed in claim 2, characterized in that the first weighting factor (g) is $2^{-1}$.

4. A data reduction circuit as claimed in any one of claims 1 to 3, characterized by the following vertical predictor (vp):
   - On the input side, it contains a seventh delay element (v7) whose delay is two clock periods shorter than the multiple of this period which is equal to the number of picture elements per video line;
   - the output of the seventh delay element (v7) is followed by the series combination of an eighth delay element (v8) and a ninth delay element (v9) each providing a delay equal to one clock period, and
   - the input, the center tap, and the output of this series combination are each connected via an additional constant multiplier (m31, m32, m33) for a further weighting factor (g1, g2, g3) to one of the inputs of a third adder (a3), whose output is that of the vertical predictor (vp).

5. A data reduction circuit as claimed in claim 4, characterized by the following features:
   - The delay produced by the seventh delay element (v7) is four clock periods shorter than the multiple of this period which is equal to the number of picture elements per video line;

- the ninth delay element (v9) and the additional constant multiplier (m33) following the latter are eliminated, and
- the two other additional constant multipliers (m31, m32) are combined into one constant multiplier (mg) for a common weighting factor (gg), which follows the output of the third adder (a3).

**Revendications**

1. Circuit de réduction de données du nombre de chiffres de signaux vidéo numériques, comportant un modulateur réalisant une modulation différentielle impulsion-code, qui contient, comme circuits partiels, des dispositifs de retardement (v...), des additionneurs (a...), des soustracteurs (s...), des multiplicateurs (m...), des dispositifs (vp) de prédiction horizontale et verticale, qui emploient pour la prédiction, moyennant l'utilisation de facteurs de pondération inférieurs à un, le mot de données qui précède un mot de données considéré d'une ligne de l'image de télévision, le mot de données, qui correspond audit mot de données, de la ligne précédente ainsi que le mot de données, qui correspond au mot de données considéré, de la ligne précédente, ainsi qu'un quantificateur (q), dont les données de sortie sont converties par un convertisseur de code (cw) en un signal de sortie (rv) possédant le nombre de chiffres réduit, et dans lequel,

  - les circuits partiels sont agencés pour réaliser le traitement parallèle des données,
  - les données d'entrées sont envoyées à un premier dispositif de retardement, (v1), dont la sortie est raccordée à l'entrée du minuende d'un premier soustracteur (s1) et varient à la cadence d'un signal de cadence,
  - la sortie du premier soustracteur (s1) est raccordée, par l'intermédiaire d'un second dispositif de retardement (v2), à l'entrée du minuende d'un second soustracteur (s2), dont la sortie est raccordée à l'entrée du quantificateur (q),
  - la sortie du dernier soustracteur est raccordée par l'intermédiaire d'un troisième dispositif de retardement (v3), à la première entrée d'un premier additionneur (a1) et, par l'intermédiaire d'un premier multiplicateur (m11), réalisant une multiplication par une constante égale à un premier facteur de conversion (g) à l'entrée du nombre à soustraire, du second soustracteur (s2), et

  - le retard respectif produit par les trois dispositifs de retardement (v1,v2,v3) est égal à la durée de la période du signal de cadence, caractérisé par les caractéristiques suivantes :
  - la sortie du quantificateur (q) est raccordée directement à l'entrée du troisième dispositif de retardement (v3),
  - la section entrée-sortie du minuende d'un troisième soustracteur (s3) est branchée en amont du premier dispositif de retardement (v1),
  - la sortie du premier additionneur (a1) est raccordée par l'intermédiaire d'un multiplicateur (m2) réalisant une multiplication par une constante égale à un second facteur de pondération (g²), qui est égal au carré du premier facteur de pondération (g), à l'entrée du nombre à soustraire du premier soustracteur (s1), et en outre, dans cet ordre, par l'intermédiaire du second multiplicateur (m12) réalisant une multiplication par une constante égale au premier facteur de pondération (g), par l'intermédiaire d'une section entrée-sortie d'un second additionneur (a2) et par l'intermédiaire d'un quatrième dispositif de retardement (v4), à la seconde entrée du premier additionneur (a1) ainsi qu'à l'entrée du dispositif de prédiction verticale (vp),
  - dont la sortie est raccordée
    - à l'entrée du nombre à soustraire du troisième soustracteur (s3),
    - par l'intermédiaire d'un troisième multiplicateur (m13) réalisant une multiplication par une constante égale au premier facteur de pondération (g), à l'entrée du nombre à soustraire d'un quatrième soustracteur (s4), et
    - par l'intermédiaire d'un cinquième dispositif de retardement (v5) à l'autre entrée du second additionneur (a2),
  - le signal de sortie du quatrième soustracteur (s4) est envoyé, par l'intermédiaire d'un cinquième dispositif de retardement (v6), à l'entrée du minuende du troisième soustracteur (s3), à la place des signaux d'entrée qui sont présents à l'entrée du minuende du quatrième soustracteur (s4), et
  - le retard produit par le cinquième dispositif de retardement (v5) est égal au double de la durée de la période du signal de cadence et le retard produit par le sixième dispositif de retardement (v6) est égal à la durée de la période du signal de cadence.

2. Circuit de réduction de données selon la revendication 1, caractérisé en ce que les facteurs de pondération sont des puissances de deux possédant des exposants négatifs.

3. Circuit de réduction de données selon la revendication 2, caractérisé en ce que le premier facteur de pondération (g) est égal à $2^{-1}$.

4. Circuit de réduction de données selon l'une des revendications 1 à 3, caractérisé par le dispositif suivant de prédiction verticale (vp) :
   - il contient, côté entrée, un septième dispositif de retardement (v7), qui produit un retard inférieur, de deux durées de la période du signal de cadence, au multiple, qui correspond au nombre des points d'image pour chaque ligne vidéo, de cette durée de période,
   - en aval de la sortie du septième dispositif de retardement (v7) est branché le circuit série formé d'un huitième et d'un neuvième dispositifs de retardement (v8,v9), qui produisent un retard égal respectivement à la durée de la période du signal de cadence, et
   - l'entrée, la prise médiane et la sortie de ce circuit série sont raccordées, par l'intermédiaire d'un autre multiplicateur respectif (m31,m32,m33) réalisant une multiplication par un autre facteur de pondération (g1,g2,g3), à l'une respective des trois entrées d'un troisième additionneur (a3), dont la sortie constitue la sortie du dispositif de prédiction verticale (vp).

5. Circuit de réduction de données selon la revendication 4, caractérisé par les caractéristiques suivantes :
   - le retard produit par le septième dispositif de retardement (v7) est inférieur, de quatre durées de la période du signal de cadence, au multiple, qui correspond au nombre des points d'image pour chaque ligne vidéo, de cette durée de période,
   - le neuvième dispositif de retardement (v9) et l'autre multiplicateur (m33) réalisant une multiplication par une constante et branché en aval de ce dispositif de retardement sont supprimés, et
   - les deux autres multiplicateurs (m31,m32) qui réalisent une multiplication par des constantes, sont réunis pour former un multiplicateur (mg) réalisant une multiplication par une constante égale au facteur de pondération commun (gg), qui est branché en aval de la sortie du troisième additionneur (a3).

EP 0 242 413 B1

FIG. 1

FIG. 2

FIG. 3